# EUROPÄISCHE PATENTSCHRIFT

(11) **EP 2 556 651 B1**
(45) Veröffentlichungstag und Bekanntmachung des Hinweises auf die Patenterteilung: **05.03.2014**
(21) Anmeldenummer: 11717565.3
(22) Anmeldetag: 26.04.2011
(51) Int. Cl.: H04L 29/08, H04L 29/06, G05B 19/418

(54) **VERFAHREN UND VORRICHTUNG ZUM AUSTAUSCH VON DATEN ZWISCHEN ZWEI GERÄTEN EINES AUTOMATISIERUNGSNETZWERKS**
METHOD AND APPARATUS FOR INTERCHANGING DATA BETWEEN TWO DEVICES IN AN AUTOMATION NETWORK
PROCÉDÉ ET DISPOSITIF D'ÉCHANGE DE DONNÉES ENTRE DEUX APPAREILS D'UN RÉSEAU D'AUTOMATISATION

(30) Priorität: 25.05.2010 DE 102010021450
(43) Veröffentlichungstag der Anmeldung: 13.02.2013
(73) Patentinhaber: Siemens Aktiengesellschaft, 80333 München (DE)
(72) Erfinder: ELSTERER, Stefan, 90762 Fürth (DE); HOCK, Christian, 90763 Fürth (DE); PESCHKE, Jörn, 90489 Nürnberg (DE); VOLKMANN, Frank, 90475 Nürnberg (DE)
(86) Internationale Anmeldenummer: PCT/EP2011/056562
(87) Internationale Veröffentlichungsnummer: WO 2011/147653

(56) Entgegenhaltungen:
- WO-A1-2007/105979
- CREVATIN M ET AL: "Security for Industrial Communication Systems", PROCEEDINGS OF THE IEEE, IEEE. NEW YORK, US, Bd. 93, Nr. 6, 1. Juni 2005 (2005-06-01), Seiten 1152-1177, XP011133109, ISSN: 0018-9219, DOI: DOI:10.1109/JPROC.2005.849714
- FLAMMINI A ET AL: "Wired and wireless sensor networks for industrial applications", MICROELECTRONICS JOURNAL, MACKINTOSH PUBLICATIONS LTD. LUTON, GB, Bd. 40, Nr. 9, 1. September 2009 (2009-09-01), Seiten 1322-1336, XP026547128, ISSN: 0026-2692, DOI: DOI:10.1016/J.MEJO.2008.08.012 [gefunden am 2008-10-05]
- FERRARI P ET AL: "Performance analysis of PROFINET networks", COMPUTER STANDARDS AND INTERFACES, ELSEVIER SEQUOIA. LAUSANNE, CH, Bd. 28, Nr. 4, 1. April 2006 (2006-04-01), Seiten 369-385, XP025115571, ISSN: 0920-5489, DOI: DOI:10.1016/J.CSI.2005.03.008 [gefunden am 2006-04-01]

## Beschreibung

Die Erfindung betrifft ein Verfahren zum Austausch von Daten zwischen zwei Geräten eines Netzwerks, welches sich zum Austausch der Daten eines Kommunikationsprotokolls mit einer Schnittstelle nach dem OPC-UA Standard bedient. Die Erfindung betrifft auch eine Vorrichtung zum Austausch von Daten zwischen zwei Geräten sowie ein Netzwerk mit zumindest zwei Geräten und einer solchen Vorrichtung.

Crevatin, M. et al, "Security for Industrial Communication Systems", Proceedings of the IEEE, Bd. 93, Nr. 6, 1. Juni 2005, Seiten 1152-1177, beschreibt ein Verfahren zum Austausch von Daten zwischen zwei Geräten eines Netzwerkes, welches sich zum Austausch der Daten eines Kommunikationsprotokolls mit einer Schnittstelle nach dem OPC-Standard bedient. Unabhängig davon erwähnt die Druckschrift D1 die Verwendung von IEEE802.IQ VLAN und Prioritätsschematas, um mit einer sehr niedrigen Zeitverzögerung für zeitkritische Anwendungen eine schnelle Übertragung von Daten zu ermöglichen, indem IP-Schichten umgangen werden.

Die WO 2007/105979 A1 erwähnt im Zusammenhang einer Synchronisation eines Software-Agenten mit einem Systemzyklus in einem Automatisierungssystem eine OPC-UA (United Architecture) Schnittstelle, um zu Teilen eines Automatisierungssystems einen webbasierten Zugriff zu ermöglichen.

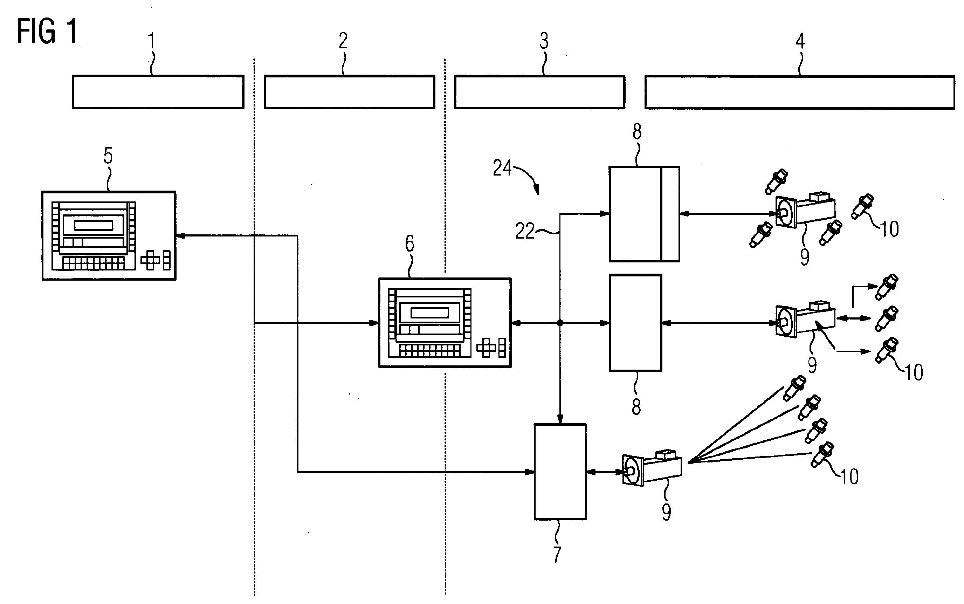

FIG 1 zeigt eine schematische Darstellung eines Automatisierungsnetzwerks. Auf der so genannten Feldebene einer automatisierungstechnischen Anlage befinden sich mehrere Geräte 8, die Daten von Sensoren 10 empfangen und geeignete Steuerdaten an Aktoren 9 ausgeben. Die Geräte 8 können hierbei als eigenständige Rechner mit den Sensoren 10 und Aktoren 9 in Wirkkontakt stehen, oder es kann sich bei den Geräten 8 um eingebettete Systeme handeln. Die Geräte 8 können insbesondere über ihre jeweils eigene steuerungstechnische Firmware verfügen. Daneben ist exemplarisch ein Rechner 7 dargestellt, welcher in der Steuerungsebene (SPS) vorliegt. Der Rechner 7 und die Geräte 8 werden zur Steuerung oder Regelung zugeordneter Maschinen einer Anlage eingesetzt. Innerhalb des automatisierungstechnischen Netzwerks liegen sie auf den Teilnetzen des so genannten Field Networks 4 bzw. Plant Floor Networks 3 vor.

Zwischen dem Plant Floor Network 3 und einem Automation Network 2 wird eine Verknüpfung über einen Rechner 6 mit einem Supervisory Control and Data Acquisition (SCADA) System gebildet. Der Rechner 6 ist damit Teil der Prozessleitebene, durch welche technische Prozesse im Plant Floor Network 3 bzw. Field Network 4 überwacht und gesteuert werden.

Auf einer übergeordneten Ebene des automatisierungstechnischen Netzwerks kann als Teil eines Enterprise Networks 1 ein Rechner 5 vorgesehen sein. Dieser kann ein Manufacturing Execution System (MES) enthalten und damit Teil der Betriebsleitebene sein. Alternativ kann vorgesehen sein, dass der Rechner 5 als Teil der Unternehmensebene mit einem Enteprise Resource Planning (ERP) System ausgerüstet ist. Dieses in der Büroebene eingesetzte ERP-System stellt eine komplexe Software zur Unterstützung der Ressourcenplanung eines Unternehmens bereit (z.B. SAP-System).

Für die Netzwerkskommunikation auf der Büroebene ist es üblich, nicht echtzeitfähige Sternsysteme einzusetzen. Als neuer Standard in der Netzwerkkommunikation hat sich hierbei zwischen dem SCADA-System des Rechners 6 und dem ERP-System des Rechners 5 das so genannte OPC Unified Architecture (OPC-UA) System gemäß den Spezifikationen der OPC Foundation etabliert. In der Datenkommunikation gemäß OPC-UA werden Daten (Werte) mit einer Qualität belegt, zu der auch die Rate gehört, mit der der Wert aktualisiert werden soll. Es werden nur solche Daten übertragen, die sich geändert haben, und deren Eigenschaften auslösen, dass der jeweilige Wert übertragen werden muss. OPC-UA bietet damit eine ereignisbasierte Kommunikation. OPC-UA basiert hierbei auf einem Remote Procedure Call (RPC) Mechanismus, wie er beispielsweise in Standard Ethernet, TCP/IP (Transmission Control Protocol / Internet Protocol) oder auch httpbasierten Netzen bekannt ist. Gemäß dem RPC-Mechanismus führt eine Anfrage eines Clients auf einem Server zum Aufruf einer Prozedur auf diesem Server, welche die Anfrage bearbeitet. Erst wenn die Bearbeitung der Anfrage abgeschlossen ist und vom Server eine Antwort an den Client gesendet wurde, kann dieser den Prozess fortsetzen, der durch die Anfrage unterbrochen wurde. Es handelt sich um die klassische Kommunikationsarchitektur der Interprozesskommunikation (Interprocess Communication, IPC) in verteilten Systemen. Nebenläufige Prozesse sind kausal voneinander abhängig. OPC-UA kennt dagegen den Mechanismus der so genannten Subscriptions. Dabei abonniert ein Empfänger von einem Sender eine bestimmte Auswahl von Informationen bzw. Daten. Kommt es zu einer Änderung in dieser Informationsmenge bzw. Teildatenauswahl, so sendet der Sender diese Änderungen selbstständig an den Empfänger. Dieser Mechanismus ist parametrierbar, da zum Beispiel vorgegeben werden kann, in welchem Zeitabstand frühestens Änderungen gesendet werden sollen.

Mit OPC-UA steht der Industrie ein Standardprotokoll zur Verfügung, mit dessen Hilfe es möglich ist, unterschiedlichste Informationen (Alarme, Prozesswerte etc.) einerseits in einem Informationsmodell zu modellieren und andererseits auch zu transportieren. Hierzu gibt es die so genannten Service Sets und Services, welche die entsprechenden Funktionalitäten zur Verfügung stellen. Erstmals ist es mit OPC-UA möglich, diese komfortable Informationsübertragung auch im Embedded Sector zu verwenden. Dies macht OPC-UA zu einem mächtigen Werkzeug im Bereich der Informationsmodellierung.

Während OPC-UA heute hauptsächlich im Automation Network 2, zum Beispiel bei SCADA-Systemen, eingesetzt wird, sind an die Kommunikationsprotokolle im Plant Floor Network 3 bzw. Field Network 4 gänzlich andere Anforderungen zu stellen. In der Automatisierung ist es erforderlich, mehrere Geräte 8 über Kommunikationsstrecken hinweg zu synchronisieren. Die Anforderungen an diese Synchronisation sind sehr vielfältig. Sie reichen bis zu harten Echtzeitanforderungen, zum Beispiel bei der Synchronisation von Antriebsachsen einer Papierfabrik. Insbesondere im Plant Floor, wo die Feldebene auf die Büroebene trifft, werden häufig bereits Ethernet-TCP/IP-basierte Infrastrukturen eingesetzt, zum Beispiel zur Kommunikation zwischen Kopfsteuerungen und/oder SCADA/MES-Systemen.

In diesen Fällen ist es üblich, so genannte getaktete Protokolle einzusetzen. Das bedeutet, dass die Zeit in Zeitscheiben zerlegt wird und genau vorgeplant wird, welches Gerät wie und wie viel innerhalb eines Zeittakts senden darf. Es werden zyklische Prozessabbilder (Tabellen mit Input-Output-Werten) zwischen den Kommunikationspartnern ausgetauscht. Hierbei gilt die Regel: Je kürzer der Zyklus (höherer Takt), desto besser ist die Synchronisationsfähigkeit und desto mehr Daten müssen permanent übertragen werden. Eine Verdopplung der Taktrate führt zur Verdopplung des gesamten Kommunikationsaufkommens. In jedem Zyklus werden immer alle Daten gesendet, unabhängig davon, ob für alle Werte dieselben Zeitanforderungen gelten oder ob sich Werte geändert haben. Auf der Feldebene ist dieses Kommunikationsprinzip in der Automatisierungstechnik üblich, um die dort herrschenden harten Echtzeitanforderungen erfüllen zu können.

Im Bereich der dezentralen Peripherie kann Echtzeitkommunikation hierbei beispielsweise über das Kommunikationsprotokoll Profinet IO erfolgen. Es ermöglicht den Datenaustausch zwischen Ethernet-basierten Feldgeräten 8. Ein weiterer Ethernet-basierter Ansatz für die Automatisierungstechnik ist Industrial Real Time Ethernet (IRTE). Gemäß IRTE ist die Kommunikation auf dem Netzwerk vollständig vorgeplant, sodass unerwünschte Datenkollisionen ausgeschlossen werden. Dieses Modell ist jedoch sehr statisch, da es nicht ohne neue Planung auf Änderungen reagieren kann. Die Planung ist sehr komplex und kann nur mithilfe eines Tools erfolgen, da Zeitverläufe zum Beispiel durch Kabellängen ebenfalls mit berücksichtigt werden müssen. Mit IRTE werden primär Linienstrukturen geplant. Der Vorteil besteht darin, dass strenger Determinismus gegeben ist.

Damit sind die Büro- bzw. Leitebene und die Feldebene hinsichtlich der in ihren Teilnetzwerken verwendeten Kommunikationsprotokollen getrennt. Die jeweils eingesetzten Kommunikationsprotokolle genügen unterschiedlichen Anforderungen. Gegebenenfalls sind die Echtzeitanforderungen, die auf der Feldebene herrschen, für die Büroebene unerheblich. Unter dem Ausdruck "vertikale Integration der Automatisierungstechnik" versteht man das Bestreben, die verschiedenen Teilnetzwerke zu integrieren und eine einheitliche Kommunikationsstruktur von der Unternehmensebene bis hinab in die Feldebene zu schaffen.

In vielen Anwendungsfeldern der Automatisierungstechnik existieren harte Echtzeitanforderungen, zum Beispiel wenn hochgenau Achsen synchronisiert werden sollen. Bei harter Echtzeit müssen Daten zwischen zwei Geräten in einer vorgegebenen Zeitspanne ausgetauscht werden. Die Kommunikation erfolgt streng deterministisch. Werden Daten außerhalb eines festgelegten Zeitintervalls ausgetauscht, erfüllen sie nicht mehr die Echtzeitanforderungen. Was unter Echtzeit zu verstehen ist, ist insbesondere in DIN 44300 definiert.

Im Falle weicher Echtzeitanforderungen sind die Bedingungen, die an den zeitlichen Ablauf des Datenaustausches gestellt werden, weniger streng. Es muss lediglich sichergestellt sein, dass die Daten zwischen zwei Geräten mit einer vorgegebenen Wahrscheinlichkeit in einer vorbestimmten Zeitspanne ausgetauscht werden. Beispielsweise kann vorgesehen sein, dass für eine Verteilung der Zeitpunkte, zu denen der Datenaustausch erfolgt, der Mittelwert dieser Verteilung stets innerhalb eines vorgegebenen Zeitintervalls liegt. Weiche Echtzeitanforderungen sind in vielen Einsatzgebieten der Automatisierungstechnik ausreichend. Dies ist vor allem dann der Fall, wenn aufgrund der automatisierungstechnischen Aufgabe nicht so zeitkritische Anforderungen bestehen.

Demgemäß existieren Ansätze für Kommunikationsprotokolle, welche weiche Echtzeitanforderungen erfüllen, zum Beispiel Soft Real Time Ethernet (SRT). Im Falle von SRT werden Ethernet Prioritätsmechanismen verwendet, um konventionelle Ethernet- bzw. TCP/IP-Kommunikation Soft-Real-Time-fähig zu machen und so neben dem konventionellen Datenverkehr zu ermöglichen. Im Falle von SRT werden Kollisionen von Datenpaketen zwar vermieden, jedoch nicht vollständig ausgeschlossen. Es ist nicht erforderlich, die Kommunikation auf dem Netz vollständig vorzuplanen. Beispielsweise muss nicht zwangsläufig das Zeitverhalten der Datenpakete geplant werden, sondern nur die Wege der priorisierten Kommunikation. Es können, wie bei Ethernet bzw. Bürokommunikation üblich, Sternstrukturen geplant werden.

Es ist Aufgabe der Erfindung, ein Verfahren, eine Vorrichtung sowie ein Netzwerk bereitzustellen, mit denen es möglich ist, eine verbesserte Integration von Teilnetzwerken zu erzielen.

Diese Aufgabe wird durch ein Verfahren, welches die Merkmale des Patentanspruchs 1 aufweist, eine Vorrichtung, welche die Merkmale des Patentanspruchs 7 aufweist, sowie ein Netzwerk mit den Merkmalen des Patentanspruchs 8 gelöst.

Das erfindungsgemäße Verfahren dient zum Austausch von Daten zwischen zwei Geräten eines Netzwerks, welches sich zum Austausch der Daten eines Kommunikationsprotokolls mit einer Schnittstelle nach dem OPC-UA Standard bedient. Hierbei umfasst das Kommunikationsprotokoll eine Prioritätsvergabefunktion, durch welche den Daten zumindest zwei verschiedene Prioritätswerte zuordenbar sind und der Austausch der Daten in Abhängigkeit von den zugeordneten Prioritätswerten erfolgt, sodass die Daten zwischen den zwei Geräten mit einer vorgegebenen Wahrscheinlichkeit in einer vorbestimmten Zeitspanne austauschbar sind.

OPC-UA (Object Linking and Embedding for Process Control Unified Architecture) ist eine OPC Spezifikation der OPC Foundation und auf www.opcfoundation.org beschrieben. Die Prioritätsvergabefunktion kann insbesondere in Form einer Soft Real Time Erweiterung im Kommunikationsprotokoll implementiert sein. Insbesondere kann vorgesehen sein, dass das Applikationsprotokoll von OPC-UA nicht verändert ist, während die Protokollschicht von OPC-UA um die Soft Real Time Erweiterungen modifiziert ist. Die Prioritätsvergabefunktion kann insbesondere den Daten Prioritätswerte dergestalt zuordnen, dass im Falle einer Kollision von Daten auf dem Netzwerk, beispielsweise in einem Switch bzw. Router, über die Prioritätswerte festgelegt ist, welche Daten bevorzugt weitergeleitet werden. Insbesondere kann vorgesehen sein, dass bestimmte hochpriore Werte an solche Daten vergeben werden, deren Austausch weichen Echtzeitanforderungen bzw. Soft Real Time Anforderungen genügen soll. Solche Daten sind dann mit einer vorgegebenen Wahrscheinlichkeit in einer vorbestimmten Zeitspanne zwischen zwei Geräten austauschbar. Die Prioritätsvergabefunktion kann insbesondere gemäß einer aus dem Stand der Technik bekannten Soft Real Time Applikation ausgestaltet sein. Insbesondere kann vorgesehen sein, dass TCP/IP Pakete gemäß geeigneter Soft Real Time Erweiterungen modifiziert werden.

Mit dem Soft Real Time Ansatz können Echtzeitanforderungen in einem gewissen Rahmen gelöst werden, ohne beispielsweise den entsprechenden Aufwand einer IRTE Lösung aufbringen zu müssen. Ein konventionelles OPC-UA Kommunikationsprotokoll kann mit nur geringfügigen Änderungen ertüchtigt werden, in Soft Real Time Umgebungen nahezu ohne Einschränkung des konventionellen TCP/IP Umfelds eingesetzt zu werden. Die Kommunikation eines Servers, in welchem das Kommunikationsprotokoll gemäß dem erfindungsgemäßen Verfahren eingesetzt ist, kann mit einem Server, welcher das konventionelle OPC-UA Kommunikationsprotokoll verwendet, über einen einfachen Multiprotokoll-Router erfolgen, ohne dass spezielle Hardware erforderlich wäre.

Der Erfindung liegt die Überlegung zugrunde, OPC-UA mittels Soft Real Time Erweiterungen so zu modifizieren, dass die eigentlich nicht echtzeitfähige OPC-UA Kommunikation nunmehr weiche Echtzeiteigenschaften aufweist. Durch die Kombination einer OPC-UA Schnittstelle und der Prioritätsvergabefunktion in einem Kommunikationsprotokoll wird Kommunikation ermöglicht, die weichen Echtzeitanforderungen genügt und vielen Anforderungen in der Automatisierungstechnik gerecht wird. Das so realisierte Kommunikationsprotokoll lässt sich in Geräten der Feldebene einfach und unkompliziert implementieren. Zudem ist ein problemloser Datenaustausch mit OPC-UA-basierten Geräten höherliegender Ebenen, wie zum Beispiel dem Automation Network oder dem Enteprise Network, sichergestellt. Es wird ein hohes Maß an Interkompatibilität zwischen Teilnetzwerken einer automatisierungstechnischen Anlage erreicht und die vertikale Integration erheblich verbessert. Das Kommunikationsprotokoll zeichnet sich durch eine hohe Effizienz aus, da insbesondere aufgrund der OPC-UA Komponente überflüssiger Datenaustausch sicher vermieden wird. Gleichzeitig stellt die Prioritätsvergabefunktion die Echtzeitfunktionalität gemäß Soft Real Time sicher.

Vorzugsweise ordnet die Prioritätsvergabefunktion einer ersten Art von Daten einen ersten Prioritätswert zu und einer zweiten Art von Daten einen zweiten Prioritätswert, wobei für eine vorgebbare Netzstruktur, über welche der Austausch der Daten zwischen den zwei Geräten abläuft, im Falle einer Kollision der Daten der ersten Art und Daten der zweiten Art aufgrund der zugeordneten Prioritätswerte die Daten der zweiten Art bevorzugt übertragen werden. Unter Kollision ist insbesondere das gleichzeitige Eintreffen von Datenpaketen an einem Knotenpunkt des Netzwerks, zum Beispiel einem Switch bzw. Router, zu verstehen. In einer Kollisionssituation ist insbesondere nicht deterministisch festgelegt, welches der beiden Datenpakete von dem Switch bevorzugt weitergeleitet wird. Ein Kollisionsfall kann auch dann gegeben sein, wenn von dem Switch bereits ein Datenpaket verarbeitet wird, während ein zweites Datenpaket eintrifft, sodass das zweite Datenpaket nicht unmittelbar weiter verarbeitet werden kann, sondern in seinem Weitertransport so lange unterbrochen ist, bis das erste Datenpaket vollständig verarbeitet ist. In einem solchen Kollisionsfall wird durch die Prioritätswerte sichergestellt, dass die Daten der zweiten Art gegenüber den Daten der ersten Art bevorzugt abgefertigt werden. Es kann insbesondere auch vorgesehen sein, dass eine bereits begonnene Verarbeitung der Daten der ersten Art unterbrochen wird, wenn Daten der zweiten Art eintreffen, sodass nunmehr die Daten der zweiten Art bevorzugt bearbeitet und auf dem Netz weitergeleitet werden. Auf diese Art ist an Verzweigungspunkten des Netzwerks Determinismus wiederhergestellt. Insbesondere kann es sich dann bei den Daten der zweiten Art um solche handeln, die weichen Echtzeitanforderungen genügen müssen. Diese echtzeitrelevanten Daten werden dann höherprior weitergeleitet als andere Daten, für die die Einhaltung eines Übertragungszeitfensters weniger kritisch ist.

Vorzugsweise werden Zeitfenster für den Austausch von Daten der zweiten Art so festgelegt, dass für eine vorgebbare Netzstruktur eine Kollisionswahrscheinlichkeit von zwei Datenpaketen mit jeweils ausschließlich Daten der zweiten Art eine vorgebbare Schwellwertwahrscheinlichkeit nicht überschreitet. Besonders bevorzugt ist es hierbei, wenn die Zeitfenster für den Austausch der Daten der zweiten Art durch Vorgabe eines periodischen Synchronisationstakts zwischen den zwei Geräten festgelegt werden. Durch die Vorplanung einer Taktung kann sichergestellt werden, dass keine zwei hochprioren Datenpakete mit Daten der zweiten Art gleichzeitig an einem Switch aufeinandertreffen. Kollisionssituationen werden so sicher vermieden. Der echtzeitfähige Datenaustausch wird garantiert.

Vorzugsweise kann vorgesehen sein, dass die Netzstruktur so ausgebildet wird, dass eine netzbedingte Kollisionswahrscheinlichkeit von Datenpaketen mit jeweils ausschließlich Daten der zweiten Art eine vorgebbare netzbedingte Schwellwertwahrscheinlichkeit nicht überschreitet. Vorzugsweise wird dann die Netzstruktur dadurch ausgebildet, dass Kommunikationsstrecken und/oder Kommunikationsknoten so ausgewählt werden, dass die netzbedingte Kollisionswahrscheinlichkeit die netzbedingte Schwellwertwahrscheinlichkeit nicht überschreitet. Durch eine intelligente Vorplanung können beispielsweise Kabelverläufe innerhalb des Netzwerks sowie die Positionen von Knoten (Switches bzw. Router) so angelegt werden, dass die Wahrscheinlichkeit einer Kollision von Daten der zweiten Art möglichst gering gehalten wird. Durch die Definition von Schwellwertwahrscheinlichkeiten ist zu einem gewissen Grad Determinismus sichergestellt. Die Gefahr, dass es zum Auftreten von Kollisionen kommt lässt sich begrenzen. Damit lässt sich sehr gut die Bedingung erfüllen, dass die Daten zwischen den zwei Geräten mit einer vorgegebenen Wahrscheinlichkeit in einer vorbestimmten Zeitspanne ausgetauscht werden.

Eine erfindungsgemäße Vorrichtung dient zum Austausch von Daten zwischen zwei Geräten eines Netzwerks, welche sich zum Austausch der Daten eines Kommunikationsprotokolls mit einer Schnittstelle nach dem OPC-UA Standard bedient. Das Kommunikationsprotokoll weist hierbei eine Prioritätsvergabefunktion auf, durch welche den Daten zumindest zwei verschiedene Prioritätswerte zuordenbar sind. Das Kommunikationsprotokoll gewährleistet, dass der Austausch der Daten in Abhängigkeit von den zugeordneten Prioritätswerten erfolgt, sodass die Daten zwischen den zwei Geräten mit einer vorgegebenen Wahrscheinlichkeit in einer vorbestimmten Zeitspanne austauschbar sind.

Ein erfindungsgemäßes Netzwerk umfasst zumindest zwei Geräte sowie eine erfindungsgemäße Vorrichtung.

Die mit Bezug auf das erfindungsgemäße Verfahren dargestellten bevorzugten Ausführungsformen und deren Vorteile gelten entsprechend für die erfindungsgemäße Vorrichtung sowie das erfindungsgemäße Netzwerk.

Anhand von Ausführungsbeispielen wird die Erfindung im Folgenden näher erläutert. Es zeigen:
- FIG 1: eine schematische Darstellung eines mehrschichtigen Netzwerks einer automatisierungstechnischen Anlage;
- FIG 2A: eine schematische Darstellung des Datenaustauschs zwischen zwei Geräten, wobei zwischen gesendeten Datenpaketen ein Kollisionsfall eintritt;
- FIG 2B: eine schematische Darstellung des Datenaustauschs zwischen zwei Geräten, wobei ein Kollisionsfall durch Vergabe geeigneter Prioritätswerte vermieden wird;
- FIG 3A: eine Netzinfrastruktur nach dem Stand der Technik;
- FIG 3B: eine Netzinfrastruktur; und
- FIG 4: eine schematische Darstellung eines Geräts, welches sich zum Datenaustausch in einem Netzwerk eines Kommunikationsprotokolls gemäß einem Ausführungsbeispiel des erfindungsgemäßen Verfahrens bedient.

In den Figuren sind gleiche oder funktionsgleiche Elemente mit den gleichen Bezugszeichen versehen.

Die Erfindung erlaubt es, OPC-UA im Bereich der Echtzeitkommunikation (deterministische Kommunikation) einzusetzen. OPC-UA, das bisher hauptsächlich im Automation Network 2 (zum Beispiel im Rechner 6 mit dem SCADA-System) eingesetzt wurde, kann jetzt bis in das Plant Floor Network 3 bzw. Field Network 4 vordringen. Innerhalb der Automatisierungspyramide wird unter Einsatz des vorgeschlagenen Verfahrens der Anwendungsbereich von OPC-UA nach unten in der Pyramide erweitert. Da es Bestrebungen gibt, OPC-UA auch bis zum Rechner 5 mit dem ERP- bzw. MES-System im Enterprise Network 1 hin einzusetzen, erhält man folglich eine durchgängige Kommunikation und einheitliche Sicht auf die Prozessdaten von der untersten Ebene bis hin zur ERP-Ebene. Es wird dieselbe Technik durchgehend eingesetzt, was die vollständige Interoperabilität sicherstellt, ohne dass zusätzliche Hardware (Mapper oder Wandler) notwendig wären.

Eine Stärke von OPC-UA ist seine Mächtigkeit in der Informationsmodellierung, die gleichzeitig dazu verwendet wird, die Interoperabilität von Komponenten zu verbessern bzw. zu ermöglichen. Alle beteiligten Geräte 8 liefern nicht nur ihre Prozesswerte, sondern darüber hinaus im Informationsmodell auch semantische Information über diese Werte. Dieser Vorteil wirkt jetzt - ohne Mehraufwand - bis in das Plant Floor Network 3.

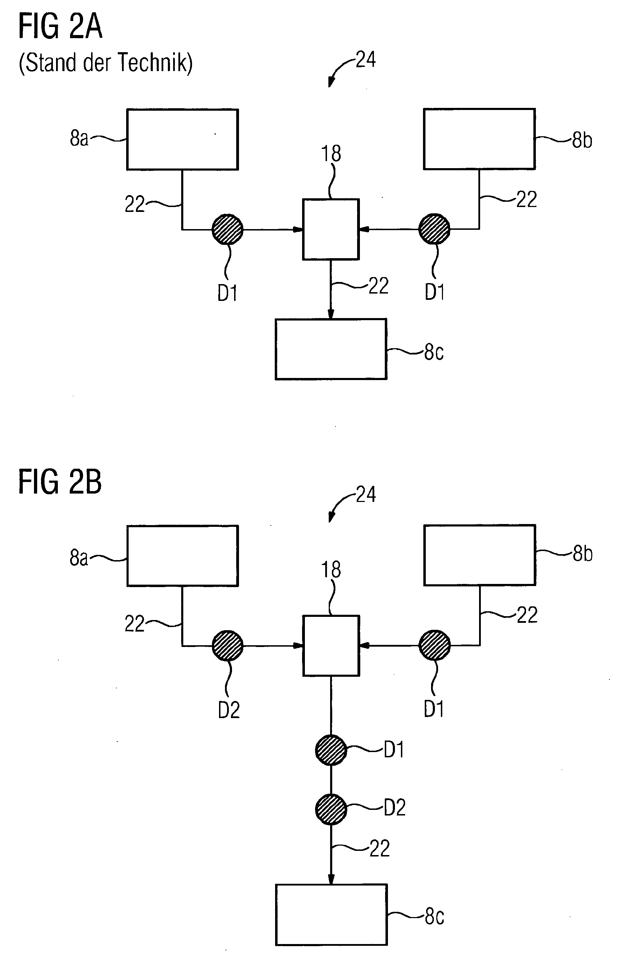

FIG 2A zeigt schematisch die Kommunikation eines Geräts 8a mit einem Gerät 8c bzw. die Kommunikation eines Geräts 8b mit einem Gerät 8c. Hierzu senden die Geräte 8a und 8b Datenpakete D1 über Datenleitungen 22 an das Gerät 8c. Das Netzwerk 24 weist hierbei einen Knoten in Form eines Switches 18 auf, über welchen die Datenpakete D1 laufen müssen, um zum Gerät 8c zu gelangen. Es ist möglich, dass die Datenpakete D1 am Switch 18 gleichzeitig ankommen, sodass sich eine Kollisionssituation einstellt. Der Switch 18 muss entscheiden, welches der Datenpakete D1 zuerst an das Gerät 8c weitergeleitet werden soll.

Gemäß der Kommunikation auf Basis von IRTE nach dem Stand der Technik ist in der dargestellten Situation Determinismus nicht mehr gegeben. Kommt es zu einer Kollision, ist nicht mehr klar, welches der Datenpakete D1 zunächst weitergeleitet werden soll. Um diese Situation zu verhindern, muss der komplette Verkehr auf dem Netzwerk 24 vorgeplant sein. Im Falle der IRTE Kommunikation ist der Switch 18 hierbei als spezieller IRTE Switch mit spezifischer IRTE Hardware ausgebildet.

Gemäß einem Ausführungsbeispiel des erfindungsgemäßen Verfahrens stellt eine Prioritätsvergabefunktion Soft Real Time Funktionalität bereit. Dies bedeutet, dass Datenpaketen D1 bzw. D2 geeignete Prioritätswerte zugeordnet werden. Im Ausführungsbeispiel der FIG 2B handelt es sich bei den Daten im Datenpaket D2 um solche Daten, die für die Synchronisation der Geräte 8a und 8c essenziell sind. Diese Daten müssen folglich Echtzeitanforderungen genügen. Hinsichtlich ihrer Übertragung auf der Datenleitung 22 muss Determinismus gegeben sein. Deshalb ordnet die Prioritätsvergabefunktion des im Gerät 8a implementierten Kommunikationsprotokolls 11 dem Datenpaket D2 einen hochprioren Wert zu.

Das Gerät 8b hat dagegen lediglich dem Gerät 8c Daten zu übertragen, welche einen Betriebszustand des Geräts 8b charakterisieren, zum Beispiel seine momentane Temperatur. Zu welchem Zeitpunkt das Gerät 8c diese Information erhält, ist nicht sehr relevant. Deshalb ordnet die Prioritätsvergabefunktion, welche im Kommunikationsprotokoll 11 des Geräts 8b vorgesehen ist, dem Datenpaket D1 eine niedrige Priorität zu.

Kommt es nun zur Kollision der mit den Prioritätsinformationen behafteten Datenpakete D1 und D2 am Switch 18, welcher ebenfalls das in den Geräten 8a und 8b implementierte Kommunikationsprotokoll 11 unterstützt, wird bevorzugt das höherpriore Datenpaket D2 an das Gerät 8c weitergeleitet. Hierdurch ist Determinismus hinsichtlich des Datenpakets D2 sichergestellt und echtzeitfähige Kommunikation zwischen den Geräten 8a und 8c erreicht.

Durch eine geeignete Vorplanung muss lediglich sichergestellt werden, dass vom Gerät 8b nicht gleichzeitig ein hochpriores Datenpaket D2 an das Gerät 8c gesendet wird, wenn auch das Gerät 8a ein solches Datenpaket sendet. In der Praxis kann dies statisch durch Planung von Kommunikationswegen erreicht werden, also zeitunabhängig. Die Praxis zeigt, dass man meist die Kommunikationswege, auf denen hochpriore Pakete laufen, disjunkt zueinander aufbauen kann.

Insbesondere können OPC-UA Subscriptions durch die Prioritätsvergabefunktion als hochpriore Datenpakete D2 markiert werden. Folglich wird es durch die Verwendung des Soft Real Time Ansatzes möglich, OPC-UA Subscriptions (genauer gesagt, die Änderungsmeldungen einer Subscription) derart zu versenden, dass sie genau den Soft Real Time Ansprüchen genügen.

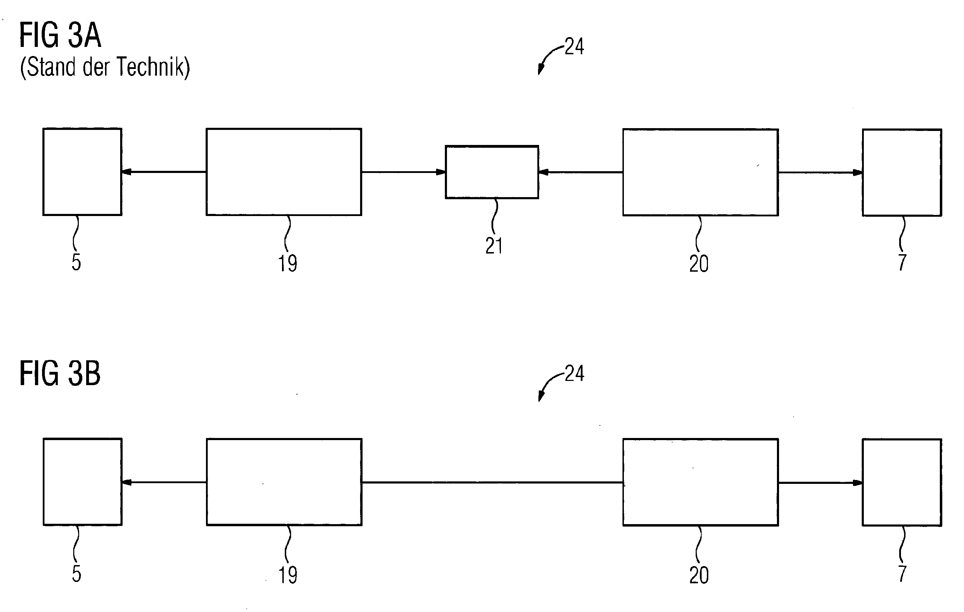

Dieses Verfahren verbessert die Interoperabilität auf einer Netzstruktur, wie sie in FIG 1 dargestellt ist. Nach dem Stand der Technik bedurfte es bisher einer so genannten Bluebox 21, um als Kommunikationsbrücke bzw. Mittler zwischen dem OPC-UA- bzw. TCP/IP-basierten Büronetz 19 und dem zum Beispiel auf Profinet IO basierenden Feldnetz 20 zu dienen. In der schematischen Darstellung der FIG 3A kommuniziert die Bluebox 21 zum Feldnetz 20 hin mittels Profinet IO und ist somit Teilnehmer im Feldnetz 20. Zum Büronetz 19 hin ist die Bluebox 21 in der Lage, beispielsweise über Web Services oder OPC-UA mit einem SAP System auf dem Rechner 5 zu kommunizieren. Sie ist dann Teilnehmer im Büronetz 19.

Gemäß dem neuen Verfahren mit dem um die Prioritätsvergabefunktion modifizierten OPC-UA Kommunikationsprotokoll kann die Bluebox 21 im Netzwerk 24 entfallen, wie dies in FIG 3B dargestellt ist. Durch die Soft Real Time Erweiterung von OPC-UA ist sowohl im Büronetz 19 als auch im Feldnetz 20 eine kompatible Kommunikationsumgebung geschaffen, sodass auf die Bluebox 21 verzichtet werden kann. Herkömmliche TCP/IP und OPC-UA/SPT Kommunikation können ohne gegenseitige Beeinflussung koexistieren.

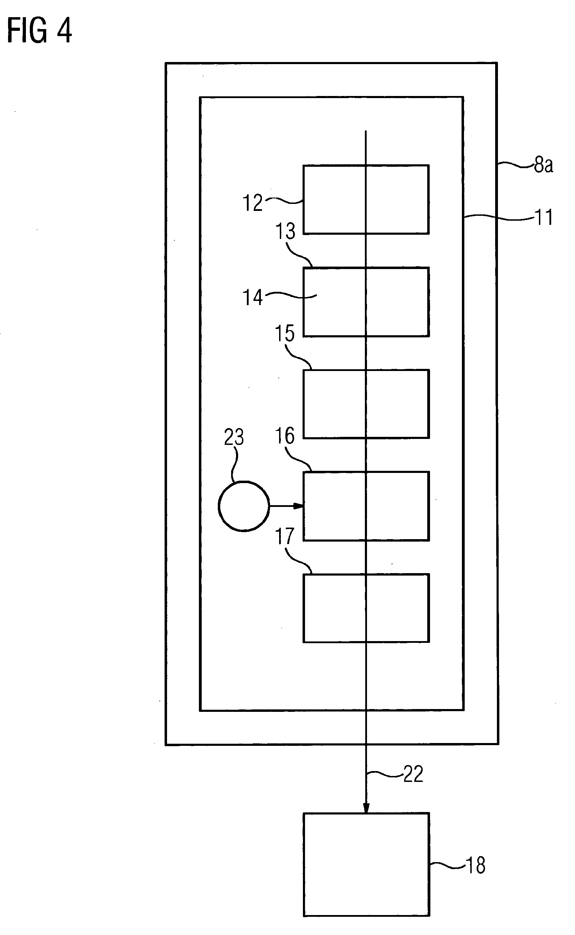

FIG 4 verdeutlicht nochmals schematisch einen möglichen Aufbau des Kommunikationsprotokolls 11, welches im Gerät 8a vorliegt. Das Gerät 8a umfasst einen Rechner, in welchem das Kommunikationsprotokoll 11 ablauffähig installiert ist. Das Kommunikationsprotokoll 11 umfasst hierbei mehrere Schichten mit zugehörigen Schnittstellen. Im einzelnen sind dies eine Applikationsschicht 12, ein Unified Architecture (UA) Stack 14 mit einer OPC-UA Schnittstelle 13, eine TCP/IP-Schnittstelle 15, eine Ethernet-Schnittstelle 16 sowie eine physikalische Schnittstelle 17. Zudem ist nunmehr eine Soft Real Time Erweiterung 23 vorgesehen, welche die Prioritätsvergabefunktion umsetzt. Je nach Art der Daten werden diese mittels der Soft Real Time Erweiterung 23 um eine Prioritätsinformation bzw. einen Prioritätswert ergänzt. Besonders bevorzugt ist es hierbei, wenn das Kommunikationsprotokoll 11 nach dem Open Systems Interconnection Reference Model (OSI Schichtenmodell der internationalen Organisation für Normung) mehrschichtig aufgebaut ist.

Insgesamt werden innerhalb der Kommunikation auf dem Netzwerk 24 die durch OPC-UA und SRT bereitgestellten Vorteile optimal kombiniert. Das in OPC-UA verwendete Prinzip der Subscriptions garantiert, dass alle relevanten Daten bei gleichzeitig geringer Datenmenge übertragen werden; durch SRT wird andererseits zu einem gewissen Grad Echtzeitfähigkeit garantiert. Eine zentrale Vorplanung der Kommunikation ist in geringerem Maße als nach dem Stand der Technik erforderlich. Dennoch steigt die übertragbare Datenmenge insgesamt. Daten für die deterministische und nicht deterministische Kommunikation können von dem Kommunikationsprotokoll sehr gut verarbeitet werden. Daneben ist ein hohes Maß an Interoperabilität auf dem Netzwerk 24 sichergestellt.

## Patentansprüche

1. Verfahren zum Austausch von Daten (D1, D2) zwischen zwei Geräten (8, 8a, 8b, 8c) eines Netzwerkes (24), welches sich zum Austausch der Daten (D1, D2) eines Kommunikationsprotokolls (11) mit einer Schnittstelle (13) nach dem OPC-UA Standard bedient,
wobei das Kommunikationsprotokoll (11) eine Prioritätsvergabefunktion (23) aufweist, durch welche den Daten (D1, D2) zumindest zwei verschiedene Prioritätswerte zuordenbar sind und der Austausch der Daten (D1, D2) in Abhängigkeit von den zugeordneten Prioritätswerten erfolgt, so dass die Daten (D1, D2) zwischen den zwei Geräten (8, 8a, 8b, 8c) mit einer vorgegebenen Wahrscheinlichkeit in einer vorbestimmten Zeitspanne austauschbar sind.

2. Verfahren nach Anspruch 1, **dadurch gekennzeichnet, dass** die Prioritätsvergabefunktion (23) einer ersten Art von Daten (D1) einen ersten Prioritätswert zuordnet und einer zweiten Art von Daten (D2) einen zweiten Prioritätswert zuordnet, wobei für eine vorgebbare Netzstruktur (24), über welche der Austausch der Daten (D1, D2) zwischen den zwei Geräten (8, 8a, 8b, 8c) abläuft, im Falle einer Kollision von Daten der ersten Art (D1) und Daten der zweiten Art (D2) aufgrund der zugeordneten Prioritätswerte die Daten der zweiten Art (D2) bevorzugt übertragen werden.

3. Verfahren nach Anspruch 2, **dadurch gekennzeichnet, dass** Zeitfenster für den Austausch von Daten der zweiten Art (D2) so festgelegt werden, dass für eine vorgebbare Netzstruktur (24) eine Kollisionswahrscheinlichkeit von zwei Datenpaketen (D2) mit jeweils ausschließlich Daten der zweiten Art eine vorgebbare Schwellwertwahrscheinlichkeit nicht überschreitet.

4. Verfahren nach Anspruch 3, **dadurch gekennzeichnet, dass** die Zeitfenster für den Austausch der Daten der zweiten Art (D2) durch Vorgabe eines periodischen Synchronisationstakts zwischen den zwei Geräten (8, 8a, 8b, 8c) festgelegt wird.

5. Verfahren nach einem der Ansprüche 2 bis 4, **dadurch gekennzeichnet, dass** die Netzstruktur (24) so ausgebildet wird, dass eine netzbedingte Kollisionswahrscheinlichkeit von zwei Datenpaketen (D2, D2) mit jeweils ausschließlich Daten der zweiten Art eine vorgebbare netzbedingte Schwellwertwahrscheinlichkeit nicht überschreitet.

6. Verfahren nach Anspruch 5, **dadurch gekennzeichnet, dass** die Netzstruktur (24) dadurch ausgebildet wird, dass Kommunikationsstrecken (22) und/oder Kommunikationsknoten (18) so ausgewählt werden, dass die netzbedingte Kollisionswahrscheinlichkeit die netzbedingte Schwellwertwahrscheinlichkeit nicht überschreitet.

7. Vorrichtung zum Austausch von Daten zwischen zwei Geräten (8, 8a, 8b, 8c) eines Netzwerkes (24), welche sich zum Austausch der Daten (D1, D2) eines Kommunikationsprotokolls (11) mit einer Schnittstelle (13) nach dem OPC-UA Standard bedient,
wobei das Kommunikationsprotokoll (11) eine Prioritätsvergabefunktion (23) aufweist, durch welche den Daten (D1, D2) zumindest zwei verschiedene Prioritätswerte zuordenbar sind und das Kommunikationsprotokoll (11) gewährleistet, dass der Austausch der Daten (D1, D2) in Abhängigkeit von den zugeordneten Prioritätswerten erfolgt, so dass die Daten (D1, D2) zwischen den zwei Geräten (8, 8a, 8b, 8c) mit einer vorgegebenen Wahrscheinlichkeit in einer vorbestimmten Zeitspanne austauschbar sind.

8. Netzwerk (24) mit zumindest zwei Geräten (8, 8a, 8b, 8c) mit einer Vorrichtung nach Anspruch 7.

## Claims

1. Method for interchanging data (D1, D2) between two devices (8, 8a, 8b, 8c) of a network (24), which method makes use of a communication protocol (11) having an interface (13) conforming to the OPC-UA standard for the purpose of interchanging the data (D1, D2),
wherein the communication protocol (11) has a priority allocation function (23) by means of which at least two different priority values can be assigned to the data (D1, D2), and the interchange of the data (D1, D2) takes place as a function of the assigned priority values, with the result that the data (D1, D2) can be interchanged between the two devices (8, 8a, 8b, 8c) within a predetermined time period with a predefined probability.

2. Method according to claim 1, **characterised in that** the priority allocation function (23) assigns a first priority value to a first type of data (D1) and a second priority value to a second type of data (D2), wherein, for a predefinable network structure (24) via which the interchange of the data (D1, D2) between the two devices (8, 8a, 8b, 8c) takes place, it is ensured on the basis of the assigned priority values that in the event of a collision between data of the first type (D1) and data of the second type (D2), the data of the second type (D2) is transmitted preferentially.

3. Method according to claim 2, **characterised in that** time windows for interchanging data of the second type (D2) are specified such that, for a predefinable network structure (24), a collision probability of two data packets (D2), each of which contains data of the second type exclusively, does not exceed a predefinable threshold value probability.

4. Method according to claim 3, **characterised in that** the time windows for interchanging the data of the second type (D2) are specified by parameterisation of a periodic synchronisation clock between the two devices (8, 8a, 8b, 8c).

5. Method according to one of claims 2 to 4, **characterised in that** the network structure (24) is embodied in such a way that a network-related collision probability of two data packets (D2, D2), each of which contains data of the second type exclusively, does not exceed a predefinable network-related threshold value probability.

6. Method according to claim 5, **characterised in that** the network structure (24) is embodied in such a way that communication links (22) and/or communication nodes (18) are selected such that the network-related collision probability does not exceed the network-related threshold value probability.

7. Apparatus for interchanging data between two devices (8, 8a, 8b, 8c) of a network (24), which apparatus makes use of a communication protocol (11) having an interface (13) conforming to the OPC-UA standard for the purpose of interchanging the data (D1, D2),
wherein the communication protocol (11) has a priority allocation function (23) by means of which at least two different priority values can be assigned to the data (D1, D2), and the communication protocol (11) ensures that the interchange of the data (D1, D2) takes place as a function of the assigned priority values, with the result that the data (D1, D2) can be interchanged between the two devices (8, 8a, 8b, 8c) within a predetermined time period with a predefined probability.

8. Network (24) comprising at least two devices (8, 8a, 8b, 8c) having an apparatus according to claim 7.

## Revendications

1. Procédé d'échange de données (D1, D2) entre deux appareils (8, 8a, 8b, 8c) d'un réseau (24), lequel se sert, aux fins de l'échange des données (D1, D2), d'un protocole de communication (11) présentant une interface (13) selon la norme OPC-UA,
le protocole de communication (11) comportant une fonction d'attribution de priorité (23) qui permet d'associer au moins deux valeurs de priorité différentes aux données (D1, D2) et du fait de laquelle l'échange des données (D1, D2) s'effectue en fonction des valeurs de priorité associées, de sorte que les données (D1, D2) peuvent être échangées entre les deux appareils (8, 8a, 8b, 8c) avec une probabilité prédéterminée dans un laps de temps prédéterminé.

2. Procédé selon la revendication 1, **caractérisé en ce que** la fonction d'attribution de priorité (23) associe une première valeur de priorité à un premier type de données (D1) et une deuxième valeur de priorité à un deuxième type de données (D2), les données du deuxième type (D2) étant, pour une structure de réseau prédéterminable (24) via laquelle se déroule l'échange des données (D1, D2) entre les deux appareils (8, 8a, 8b, 8c), transmises préférentiellement, sur la base des valeurs de priorité associées, en cas de collision entre des données du premier type (D1) et des données du deuxième type (D2).

3. Procédé selon la revendication 2, **caractérisé en ce que** des fenêtres temporelles pour l'échange de données du deuxième type (D2) sont déterminées de manière telle que, pour une structure de réseau prédéterminable (24), une probabilité de collision entre deux paquets de données (D2) comprenant chacun exclusivement des données du deuxième type ne dépasse pas une probabilité prédéterminable de valeur seuil.

4. Procédé selon la revendication 3, **caractérisé en ce que** les fenêtres temporelles pour l'échange des données du deuxième type (D2) sont déterminées par spécification d'une cadence de synchronisation périodique entre les deux appareils (8, 8a, 8b, 8c).

5. Procédé selon l'une des revendications 2 à 4, **caractérisé en ce que** la structure de réseau (24) est réalisée de manière telle qu'une probabilité, liée au réseau, de collision entre deux paquets de données (D1, D2) comprenant chacun exclusivement des données du deuxième type ne dépasse pas une probabilité de valeur seuil prédéterminable liée au réseau.

6. Procédé selon la revendication 5, **caractérisé en ce que** la structure de réseau (24) est réalisée par sélection de trajets de communication (22) et/ou de noeuds de communication (18) de manière telle que la probabilité de collision liée au réseau ne dépasse pas la probabilité de valeur seuil liée au réseau.

7. Dispositif pour échanger des données entre deux appareils (8, 8a, 8b, 8c) d'un réseau (24), lequel dispositif se sert, aux fins de l'échange des données (D1, D2), d'un protocole de communication (11) présentant une interface (13) selon la norme OPC-UA,
le protocole de communication (11) comportant une fonction d'attribution de priorité (23) qui permet d'associer au moins deux valeurs de priorité différentes aux données (D1, D2), et le protocole de communication (11) garantissant que l'échange des données (D1, D2) s'effectue en fonction des valeurs de priorité associées, de sorte que les données (D1, D2) peuvent être échangées entre les deux appareils (8, 8a, 8b, 8c) avec une probabilité prédéterminée dans un laps de temps prédéterminé.

8. Réseau (24) comportant au moins deux appareils (8, 8a, 8b, 8c) présentant un dispositif selon la revendication 7.
